# EUROPEAN PATENT APPLICATION

(11) **EP 3 099 023 A1**
(43) Date of publication of application: **30.11.2016**
(21) Application number: 16171120.5
(22) Date of filing: 24.05.2016
(51) Int. Cl.: H04L 12/58

(54) **METHOD AND DEVICE FOR SENDING MESSAGE**

(30) Priority: 29.05.2015 CN 201510290442
(71) Applicant: Xiaomi Inc., Beijing 100085 (CN)
(72) Inventor: XIANGLI, Fei, Haidian District Beijing 100085 (CN); CHENG, Shengbo, Haidian District Beijing 100085 (CN); CHEN, Baoke, Haidian District Beijing 100085 (CN)
(74) Representative: Reeve, Nicholas Edward

(57) **Abstract**

The present disclosure relates to a method and a device for sending a message, which pertains to the field of communication technology. The method includes: when monitoring that a triggering event with respect to a sending button in a message interface is generated, determining (101, 202) which condition the triggering event satisfies; if determining that the triggering event satisfies a condition for sending a common phrase, acquiring (102, 203) a common phrase corresponding to the sending button and sending the common phrase; wherein the common phrase was previously acquired through a first acquiring operation in the message interface and was previously set as corresponding to the sending button; and if determining that the triggering event satisfies a condition for sending an input message, acquiring (103, 204) a content in a message input box and sending the content. Through the present disclosure, it can improve the message sending efficiency.

## Description

### TECHNICAL FIELD

The present disclosure generally relates to the field of communication technology, and more particularly, to a method and a device for sending a message.

### BACKGROUND

With the development of communication technology, it has become more and more convenient for people to communicate with each other. For example, technologies such as Short Messaging Service, Multimedia Messaging Service, Instant Messaging and the like have brought significant convenience for people's communication. A short message is a message sent or received by a user via a mobile phone in a form of words, figures and the like, to perform textual communication. In such a situation, when a user receives a short message sent from a sending party, the user generally replies a short message to the sending party.

In the related art, a short message is replied through the following manner: after a mobile phone receives a short message sent from a sending party, the short message is displayed in a short-message displaying interface which contains a short-message input box and a sending button; upon detection of a sending command triggered by the user clicking the sending button, the mobile phone acquires a short message in the short-message input box which is input by the user and replies the short message to the sending party.

In the related art, the user has to input a to-be-sent message in a message input box of a message interface and trigger a sending button in the message interface to send the message. The efficiency of such message sending method is rather low, failing to meet the requirement of fast sending a message of the user.

We have appreciated that it would be desirable to provide a method a device for sending a message.

### SUMMARY OF THE INVENTION

According to a first aspect of embodiments of the present disclosure, there is provided a method for sending a message, which is applied in a terminal, the method including: when monitoring that a triggering event with respect to a sending button in a message interface is generated, determining which condition the triggering event satisfies; if determining that the triggering event satisfies a condition for sending a common phrase, acquiring a common phrase corresponding to the sending button and sending the common phrase; wherein the common phrase was preset as corresponding to the sending button; and

if determining that the triggering event satisfies a condition for sending an input message, acquiring a content in a message input box and sending the content.

Optionally, determining that the triggering event satisfies a condition for sending a common phrase includes: acquiring a trigger operation with respect to the sending button, if determining that the trigger operation is a preset first operation and the sending button corresponds to a common phrase, determining that the triggering event satisfies a condition for sending a common phrase.

Optionally, determining that the triggering event satisfies a condition for sending a common phrase further includes: acquiring a trigger operation with respect to the sending button, if determining that the trigger operation is a preset second operation, and the sending button corresponds to a common phrase, determining that the triggering event satisfies a condition for sending a common phrase; wherein acquiring a common phrase corresponding to the sending button and sending the common phrase comprises: acquiring the common phrase corresponding to the sending button, and inserting the common phrase corresponding to the sending button at a cursor position in a message input box of the message interface and sending the whole content in the message input box.

Optionally, the method further includes: if monitoring that a trigger operation with respect to the sending button is generated and determining the trigger operation is a preset third operation, acquiring the common phrase corresponding to the sending button, and inserting the common phrase corresponding to the sending button at a cursor position in a message input box of the message interface.

Optionally, the method further includes: acquiring a common phrase through a first acquiring operation on the message interface and setting the common phrase as corresponding to the sending button.

Optionally, acquiring a common phrase through a first acquiring operation on the message interface and setting the common phrase as corresponding to the sending button includes: if monitoring that a trigger operation with respect to a selected message in the message interface is generated, acquiring the trigger operation; and if the trigger operation is a first acquiring operation, acquiring the selected message as a common phrase and setting the common phrase as corresponding to the sending button.

Optionally, setting the common phrase as corresponding to the sending button includes: if the sending button corresponds to an existing common phrase, replacing the existing common phrase corresponding to the sending button with the acquired common phrase; or if the sending button corresponds to an existing common phrase, setting both of the acquired common phrase and the existing common phrase as corresponding to the sending button.

Optionally, if the sending button corresponds to a plurality of common phrases, the method further includes: matching each of the common phrases with a searching condition to obtain a matching degree between each of the common phrases and the searching condition; the searching condition including: intimacy between a user of the terminal and a message receiving party, a current time, and/or a friend group to which the message receiving party belongs; and displaying a common phrase with the largest matching degree on the sending button.

Optionally, the method further includes: if the triggering event is a preset fourth operation, displaying the plurality of common phrases corresponding to the sending button; when monitoring that a trigger operation with respect to one of the common phrases is generated, determining which condition the trigger operation satisfies; if determining that the trigger operation is a preset first operation, sending said one of the common phrases; if determining that the trigger operation is a preset second operation, inserting said one of the common phrases at a cursor position in a message input box and sending the whole content in the message input box; and if determining that the trigger operation is a preset third operation, inserting said one of the common phrases at a cursor position in the message input box.

Optionally, determining that the triggering event satisfies a condition for sending an input message includes: determining whether a content has been input to the message input box of the message interface before monitoring that the triggering event is generated and determining whether the sending button corresponds to a common phrase; if determining that a content has been input to the message input box before monitoring that the triggering event is generated and the sending button does not correspond to any common phrase, determining that the triggering event satisfies a condition for sending an input message; or acquiring a trigger operation with respect to the sending button, determining whether the trigger operation is a preset fifth operation and determining whether a content has been input to the message input box; if determining that the trigger operation is a preset fifth operation and a content has been input to the message input box, determining that the triggering event satisfies a condition for sending an input message.

According to a second aspect of embodiments of the present disclosure, there is provided a device for sending a message, which is applied in a terminal, the device including: a first determining module configured to, when it is monitored that a triggering event with respect to a sending button in a message interface is generated, determine which condition the triggering event satisfies; a first sending module configured to, if it is determined that the triggering event satisfies a condition for sending a common phrase, acquire a common phrase corresponding to the sending button and send the common phrase; wherein the common phrase was preset as corresponding to the sending button; and a second sending module configured to, if it is determined that the triggering event satisfies a condition for sending an input message, acquire a content in a message input box and send the content.

Optionally, the first determining module includes: a first acquiring unit configured to, when it is monitored that a triggering event with respect to a sending button in a message interface is generated, acquire the trigger operation with respect to the sending button; a first determining unit configured to determine whether the trigger operation is a preset first operation and whether the sending button corresponds to a common phrase; and a first performing unit configured to, if it is determined that the trigger operation is a preset first operation and the sending button corresponds to a common phrase, determine that the triggering event satisfies a condition for sending a common phrase.

Optionally, the first determining module further includes: a second performing unit configured to, acquire a trigger operation with respect to the sending button, if it is determined that the trigger operation is a preset second operation, and the sending button corresponds to a common phrase, determine that the triggering event satisfies a condition for sending a common phrase; wherein the first sending module is further configured to: acquire the common phrase corresponding to the sending button, and insert the common phrase corresponding to the sending button at a cursor position in a message input box of the message interface and send the whole content in the message input box.

Optionally, the device further includes: a first inserting module configured to, if it is monitored that a trigger operation with respect to the sending button is generated and it is determined that the trigger operation is a preset third operation, acquire the common phrase corresponding to the sending button, and insert the common phrase corresponding to the sending button at a cursor position in a message input box of the message interface.

Optionally, the device further includes: a setting module configured to acquire a common phrase through a first acquiring operation on the message interface and set the common phrase as corresponding to the sending button.

Optionally, the setting module includes: a second acquiring unit configured to, if it is monitored that a trigger operation with respect to a selected message in the message interface is generated, acquire the trigger operation; and a third acquiring unit configured to, if the trigger operation is a first acquiring operation, acquire the selected message as a common phrase; and a setting unit configured to set the common phrase as corresponding to the sending button.

Optionally, the setting unit is configured to, if the sending button corresponds to an existing common phrase, replace the existing common phrase corresponding to the sending button with the acquired common phrase; or if the sending button corresponds to an existing common phrase, set both of the acquired common phrase and the existing common phrase as corresponding to the sending button.

Optionally, if the sending button corresponds to a plurality of common phrases, the device further includes: a matching module configured to match each of the common phrases with a searching condition to obtain a matching degree between each of the common phrases and the searching condition; the searching condition including: intimacy between a user of the terminal and a message receiving party, a current time, and/or a friend group to which the message receiving party belongs; and a displaying module configured to display a common phrase with the largest matching degree on the sending button.

Optionally, the device further includes: an acquiring module configured to, if the triggering event is a preset fourth operation, display the plurality of common phrases corresponding to the sending button; a second determining module configured to, when it is monitored that a trigger operation with respect to one of the common phrases is generated, determine which condition the trigger operation satisfies; a third sending module configured to, if it is determined that the trigger operation is a preset first operation, send said one of the common phrases; if it is determined that the trigger operation is a preset second operation, insert said one of the common phrases at a cursor position in a message input box and send the whole content in the message input box; and a second inserting module configured to, if it is determined that the trigger operation is a preset third operation, insert said one of the common phrases at a cursor position in the message input box.

Optionally, the first determining module includes: a second determining unit configured to determine whether a content has been input to the message input box of the message interface before it is monitored that the triggering event is generated and determine whether the sending button corresponds to a common phrase; if it is determined that a content has been input to the message input box before it is monitored that the triggering event is generated and the sending button does not correspond to any common phrase, determine that the triggering event satisfies a condition for sending an input message; or a third determining unit configured to acquire a trigger operation with respect to the sending button, determine whether the trigger operation is a preset fifth operation and determine whether a content has been input to the message input box; if it is determined that the trigger operation is a preset fifth operation and a content has been input to the message input box, determine that the triggering event satisfies a condition for sending an input message.

The technical solution according to embodiments of the present disclosure may have the following beneficial effects.

When it is monitored that a triggering event with respect to a sending button in a message interface is generated, it is determined which condition the triggering event satisfies; if it satisfies a condition for sending a common phrase, a common phrase corresponding to the sending button is directly acquired and sent. Thus, the user only needs to perform one operation to quickly send a message to the receiving party, and thereby it can improve message sending efficiency and meet the requirement of fast sending a message of the user.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart illustrating a method for sending a message according to an exemplary embodiment;
Fig. 2-1 is a flow chart illustrating a method for sending a message according to another exemplary embodiment;
Fig. 2-2 is a schematic diagram illustrating a message interface according to an exemplary embodiment;
Fig. 3-1 is a block diagram of a device for sending a message according to an exemplary embodiment;
Fig. 3-2 is a block diagram of a first determining module according to another exemplary embodiment;
Fig. 3-3 is a block diagram of a device for sending a message according to another exemplary embodiment;

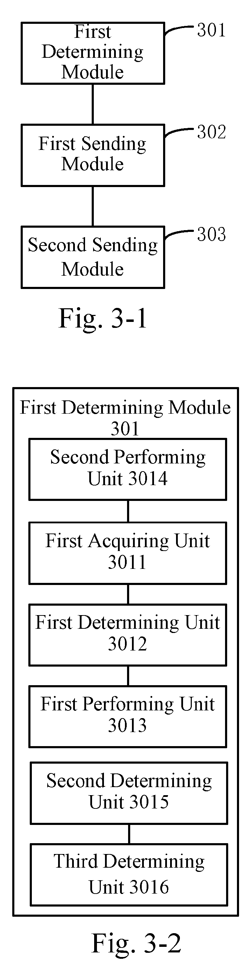

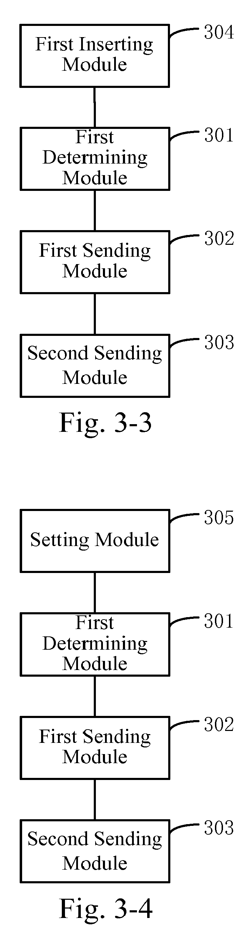

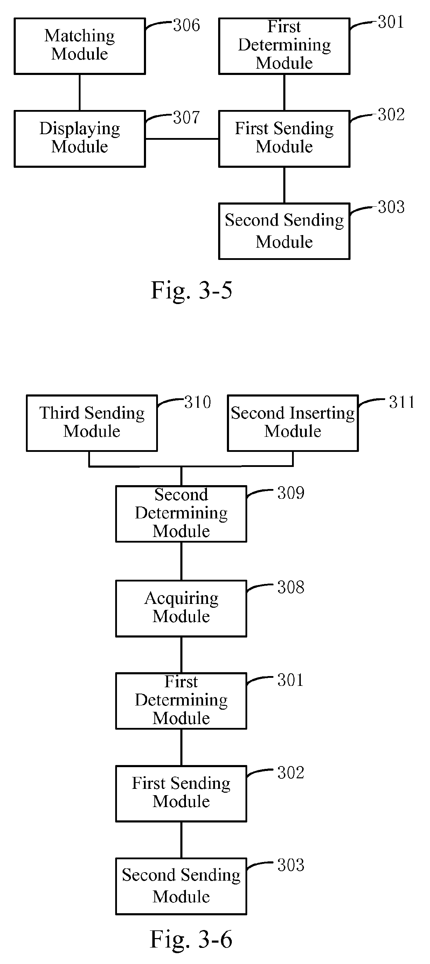

Fig. 3-4 is a block diagram of a device for sending a message according to another exemplary embodiment;
Fig. 3-5 is a block diagram of a device for sending a message according to another exemplary embodiment;
Fig. 3-6 is a block diagram of a device for sending a message according to another exemplary embodiment; and

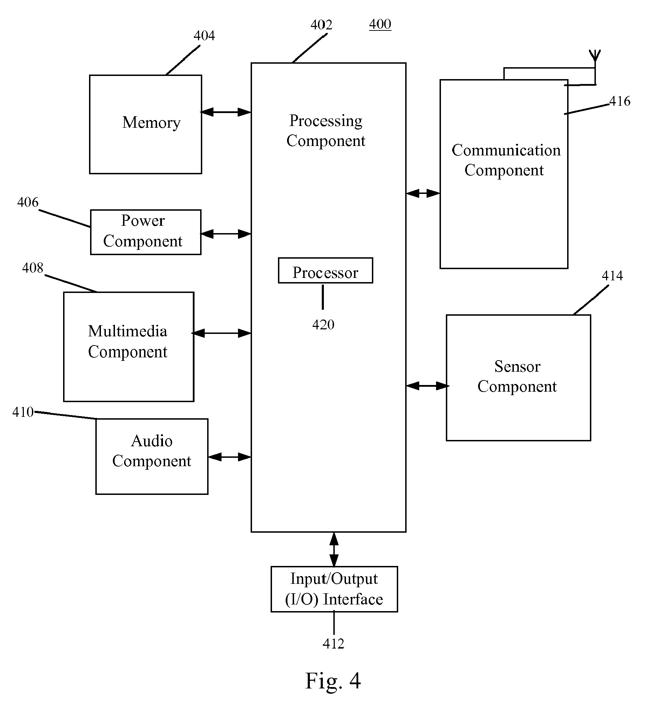

Fig. 4 is a block diagram of a device for sending a message according to another exemplary embodiment.

Through the above accompanying drawings, the specific embodiments of the present disclosure have been shown, for which a more detailed description will be given as below. These drawings and textual description are not intended to limit the scope of the concept of the present disclosure in any manner, but to explain the concept of the present disclosure to those skilled in the art through particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

In embodiments of the present disclosure, when a terminal of a user receives a message, the user wants to quickly reply a message. Currently in the related art, the user has to input a to-be-sent message in a message input box of a message interface and trigger a sending button in the message interface to send the message. The efficiency of such message sending method is rather low, failing to meet the requirement of fast sending a message of the user.

It is found during the development of the technical solution of the present disclosure that, a message which a user wants to quickly send out is generally a common phrase frequently used by the user, which is a message with a relatively high sending frequency by the user. For example, a message with a sending frequency higher than a preset threshold can be defined as a common phrase of the user. In the present disclosure, a common phrase of the user can be quickly sent out through a manner according to any of the following embodiments, to meet the requirement of fast sending a message of the user.

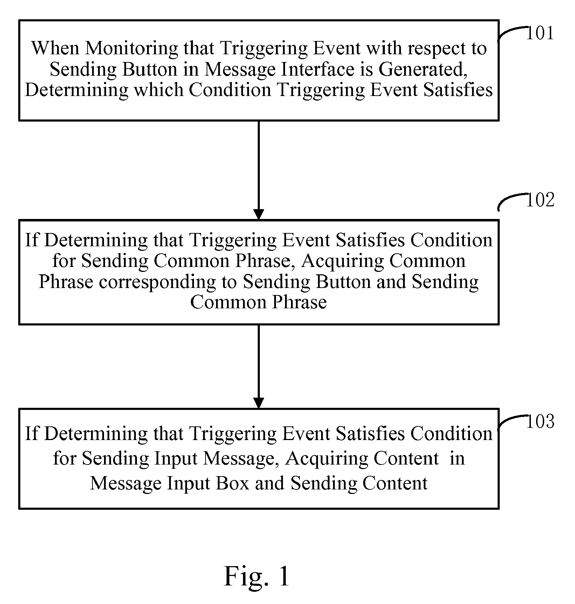

Fig. 1 is a flow chart illustrating a method for sending a message according to an exemplary embodiment. As shown in Fig. 1, the method for sending a message is applied in a mobile terminal, and includes the following steps.

In step 101, when it is detected that a triggering event with respect to a sending button in a message interface is generated, it is determined which condition the triggering event satisfies.

In step 102, if it is determined that the triggering event satisfies a condition for sending a common phrase, a common phrase corresponding to the sending button is acquired and sent; wherein the common phrase was preset as corresponding to the sending button.

In step 103, if it is determined that the triggering event satisfies a condition for sending an input message, a content in a message input box is acquired and sent.

In the embodiment of the present disclosure, when it is monitored that a triggering event with respect to a sending button in a message interface is generated, it is determined which condition the triggering event satisfies; if it satisfies a condition for sending a common phrase, a common phrase corresponding to the sending button is directly acquired and sent. Thus, the user only needs to perform one operation to quickly send a message to the receiving party, and thereby it can improve message sending efficiency and meet the requirement of fast sending a message of the user.

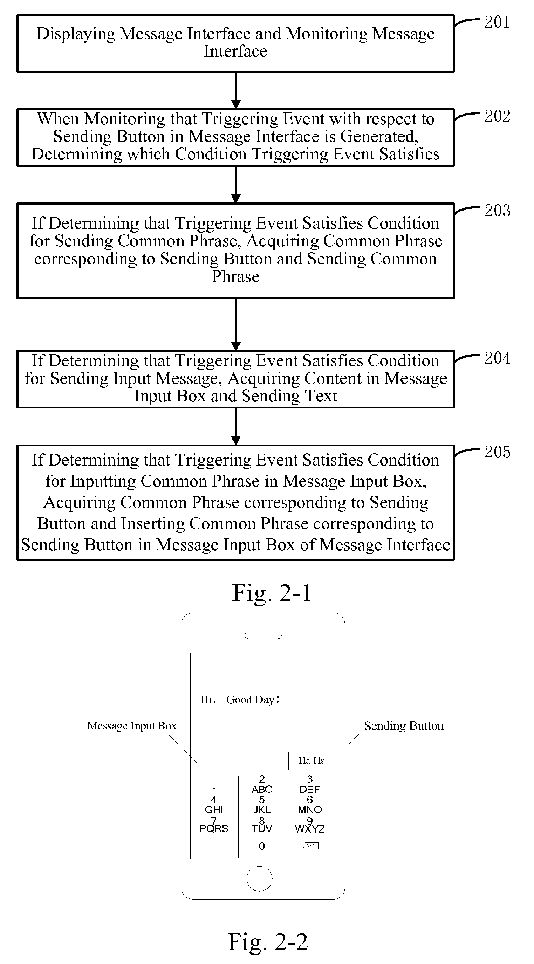

Fig. 2-1 is a flow chart illustrating a method for sending a message according to an exemplary embodiment. As shown in Fig. 2-1, the method for sending a message is applied in a mobile terminal, and includes the following steps.

In step 201, a message interface is displayed and monitored.

As shown in Fig. 2-2, the message interface includes a sending button and a message input box, as well as a message received by the mobile terminal which is sent from a sending party. Wherein, the message interface can be a short message interface, a multimedia message interface, an instant chatting interface or the like, and the message can be a short message, a multimedia message, an instant message or the like.

The sending button can be configured to correspond or be associated with at least one common phrase that is then available for sending as the message or as part of the message. A common phrase is a message frequently sent by the user. For example, a message with a sending frequency by the user which is higher than a preset threshold can be defined as a common phrase. For example, messages such as "Have you arrived at home?" and "Have you had a meal?" which are frequently sent by the user can be defined as common phrases. In Fig. 2-2, for example, a common phrase (Ha Ha) is displayed on the sending button. As will be described later, the common phrase can be selected for including in the message by triggering a number of predetermined trigger events.

A common phrase corresponding to the sending button can be previously set by the user. For example, the user can select a message in the message interface, and perform a first acquiring operation with respect to the selected message, so as to set the message as a common phrase corresponding to the sending button.

Correspondingly, when it is monitored that a trigger operation with respect to a selected message in the message interface is generated, the trigger operation is acquired and it is determined which operation the trigger operation is. If the trigger operation is a first acquiring operation, the message with respect to which the trigger operation is performed is acquired, taken as a common phrase and set as corresponding to the sending button. Wherein, a first acquiring operation can be a long press operation, a double click operation or the like.

The sending button can correspond to one or more common phrases. Then, when the sending button can only correspond to one common phrase, and it has already been set as corresponding to an existing common phrase, the existing common phrase corresponding to the sending button is replaced with the newly acquired common phrase. When the sending button has no corresponding common phrase, the sending button is set as corresponding to the newly acquired common phrase. When the sending button can correspond to more than one common phrase, and it has already been set as corresponding to an existing common phrase, both the newly acquired common phrase and the existing common phrase are set as corresponding to the sending button. When the sending button has no corresponding common phrase, the sending button is set as corresponding to the acquired common phrase.

In the present disclosure, instead of setting the sending button as corresponding to a common phrase by the user, the sending button can be set as corresponding to a common phrase through other means. For example, the mobile terminal can automatically assist the user to set a common phrase as corresponding to the sending button, and the process can be described as follows.

Sending frequencies of messages sent by the user are acquired, a message with a sending frequency which satisfies a preset condition is acquired as a common phrase and the acquired common phrase is set as corresponding to the sending button.

Wherein, when the sending button can only correspond to one common phrase, a message with a highest sending frequency can be acquired as a common phrase. When the sending button can correspond to more than one common phrase, a preset number of messages with highest sending frequencies can be taken as common phrases or messages with sending frequencies each higher than a frequency threshold as common phrases.

After the message interface is displayed, the user can send a message through the message interface. Wherein, the user can send a message through one of the following manners: as a first manner, if he wants to directly send a common phrase, the user can perform a trigger operation with respect to the sending button to trigger the mobile terminal to send a common phrase. In this case, the common phrase is sent as the message, without the user having to manually enter the text of the common phrase again. As a second manner, if he inputs a content in the message input box of the message interface and he wants to send the content, the user can perform a trigger operation with respect to the sending button after inputting a content, so as to trigger the mobile terminal to send the content; and as a third manner, if the user has input a content in the message input box and wants to input a common phrase in the message input box, the user can perform a trigger operation with respect to the sending button, to trigger the mobile terminal to insert the common phrase in the message input box and send the whole content in the message input box.

When the user performs a trigger operation with respect to the sending button in the message interface, a triggering event with respect to the sending button will be generated. The mobile terminal monitors the message interface, and when it monitors that a triggering event with respect to the sending button is generated, the following steps will be performed.

In step 202, when it is monitored that a triggering event with respect to a sending button in the message interface is generated, it is determined which condition the triggering event satisfies.

In the present step, when it is monitored that a triggering event with respect to a sending button in a message interface is generated, the trigger operation with respect to the sending button is acquired. If the trigger operation is a preset first operation and the sending button corresponds to a common phrase, it can be determined that the triggering event satisfies a condition for sending a common phrase.

Alternatively, it is determined whether a content has been input to the message input box of the message interface before it is monitored that the triggering event is generated and it is determined whether the sending button corresponds to a common phrase. If it is determined that no content has been input to the message input box of the message interface before it is monitored that the triggering event is generated and that the sending button corresponds to a common phrase, it is determined that the triggering event satisfies a condition for sending a common phrase. If it is determined that a content has been input to the message input box of the message interface before it is monitored that the triggering event is generated and that the sending button does not corresponds to any common phrase, it is determined that the triggering event satisfies a condition for sending an input message.

Alternatively, a trigger operation with respect to the sending button is acquired, and it is determined whether the trigger operation is a preset first operation and it is determined whether the sending button corresponds to a common phrase. If it is determined that the trigger operation is a preset first operation and that the sending button corresponds to a common phrase, it is determined that the triggering event satisfies a condition for sending a common phrase. If it is determined that the trigger operation is a preset first operation and a content is input in the message input box, it is determined that the triggering event satisfies a condition for sending an input message.

Alternatively, a trigger operation with respect to the sending button is acquired, and it is determined whether the trigger operation is a preset second operation and it is determined whether a content has been input to the message input box of the message interface before it is monitored that the triggering event is generated. If it is determined that the trigger operation is a preset second operation and that a content has been input to the message input box before it is monitored that the triggering event is generated, it is determined that the triggering event satisfies a condition for inserting a common phrase in the message input box. Alternatively, if it is determined that the trigger operation is a preset third operation and that a content has been input to the message input box before it is monitored that the triggering event is generated, it is determined that the triggering event satisfies a condition for inserting a common phrase in the message input box.

In the present step, the first operation, the second operation and the third operation are previously defined, and can be three different kinds of operations. The first operation is used to trigger the mobile terminal to send a common phrase. Thus, when it is determined that the trigger operation is a preset first operation and the sending button corresponds to a common phrase, it is determined that the triggering event satisfies a condition for sending a common phrase. The first operation can be a single click operation. The second operation is used to trigger the mobile terminal to insert a common phrase corresponding to the sending button into the message input box and send the common phrase together with the content in the message input box. The second operation can be a long press operation, a slide operation or the like. The third operation can be used to trigger the mobile terminal to insert a common phrase corresponding to the sending button into the message input box. The third operation can be a double click operation. Thus when it is determined that the trigger operation is a second operation or a third operation and a content has been input in the message input box, it can be determined that the triggering event satisfies a condition for sending an input message.

In step 203, if it is determined that the triggering event satisfies a condition for sending a common phrase, a common phrase corresponding to the sending button is acquired and sent.

In the present step, if the sending button corresponds to only one common phrase, the common phrase can be directly acquired and sent to the receiving party which is a party currently communicates with the user. If the sending button corresponds to a plurality of common phrases, one common phrase can be acquired and sent to the receiving party through the following manner.

A searching condition is acquired which includes at least one of a current time, intimacy between the user of the mobile terminal and a message receiving party and a friend group to which the receiving party belongs. One common phrase having a matching condition mostly matched with the searching condition is acquired from the common phrases corresponding to the sending button, and sent to the receiving party.

It should be noted that, before the present step is performed, when the common phrases are set as corresponding to the sending button, each common phrase can be provided with a corresponding matching condition. The matching condition of the common phrases can include an applicable time period, a friend group and an applicable intimacy level. For example, for a common phrase "Have you had a meal?" generally has an applicable time period from 12:00 am to 1:00 pm or 7:00 -9:00 pm. For some common phrases with intimacy expressions, such as a common phrase "What are you doing now, darling?" is applicable to families or an intimate friend of the user, and therefore this common phrase is applicable to the a family group, and has a relatively high intimacy level.

In the present disclosure, if it is determined that the trigger operation with respect to the sending button is a preset second operation, one common phrase corresponding to the sending button is inserted at a cursor position in a message input box of the message interface and the whole content in the message input box is sent. If it is determined that the trigger operation is a preset third operation, similarly, one common phrase corresponding to the sending button is inserted at a cursor position in a message input box. After the common phrase is inserted at a cursor position in a message input box, if he wants to send the content, the user can perform a first operation with respect to the sending button, so as to trigger the mobile terminal to send the whole content in the message input box.

In order to allow the user to be aware of which common phrase he can send, before he performs a trigger operation with respect to the sending button, the user can acquire one common phrase and display the common phrase on the sending button. Thus, in the present step, the common phrase displayed on the sending button can be directly acquired and sent.

Wherein, acquiring one common phrase and displaying it on the sending button can be implemented as the following process.

If the sending button corresponds to only one common phrase, the common phrase can be directly acquired and displayed on the sending button. If the sending button corresponds to a plurality of common phrases, each of the common phrases is matched with a searching condition to obtain a matching degree between each of the common phrases and the searching condition, the searching condition including at least one of a current time, intimacy between the user of the terminal and the receiving party, and a friend group to which the receiving party belongs, and the common phrase with the largest matching degree is displayed on the sending button.

In step 204, if it is determined that the triggering event satisfies a condition for sending an input message, a content in a message input box is acquired and sent.

In step 205, if it is determined that the triggering event satisfies a condition for inputting a common phrase in the message input box, a common phrase corresponding to the sending button is acquired and is inserted in the message input box of the message interface.

In the present step, acquiring a common phrase corresponding to the sending button can be referred to the process of step 203, which will not be repeated herein.

It should be noted that, if the sending button corresponds to a plurality of common phrases and the common phrase displayed on the sending button is not the one the user wants to send, the user can perform a fourth operation with respect to the sending button to trigger other common phrases to be displayed on the sending button. The fourth operation can be a long press operation, an upward slide operation, a circling operation or the like. Then, the user can select a common phrase among the plurality of common phrases and perform a trigger operation with respect to the selected common phrase.

Correspondingly, a trigger operation with respect to the sending button is acquired. If the trigger operation is a preset fourth operation, the common phrases corresponding to the sending button are displayed. When it is monitored that a trigger operation with respect to one of the common phrases is generated, it is determined which condition the trigger operation satisfies. If it is determined that the trigger operation is a preset first operation, said one common phrase is sent. If it is determined that the trigger operation is a preset second operation, said one common phrase is inserted at a cursor position in the message input box and the whole content in the message input box is sent. If it is determined that the trigger operation is a third operation, said one common phrase is inserted at a cursor position in the message input box.

After said one common phrase is inserted at a cursor position in the message input box, if he wants to send the content, the user can perform a first operation with respect to the sending button, so as to trigger the mobile terminal to send the content in the message input box.

In the embodiment of the present disclosure, after the message interface is displayed, the message interface is monitored; when it is monitored that a triggering event with respect to a sending button in the message interface is generated, it is determined which condition the triggering event satisfies; if it is determined that the triggering event satisfies a condition for sending a common phrase, a common phrase corresponding to the sending button is directly acquired and sent. Thus, the user only needs to perform one operation to quickly send a message to the receiving party, and thereby it can improve message sending efficiency and meet the requirement of fast sending a message of the user. If it satisfies a condition for sending an input message, a content in a message input box may be sent. Thereby, various message sending manners are provided to the user as options, resulting in a more flexible message sending method.

The following are device embodiments of the present disclosure, which can be configured to perform the method embodiments of the present disclosure. For details that are not disclosed in the device embodiments of the present disclosure, reference can be made to the method embodiments of the present disclosure.

Fig. 3-1 is a block diagram of a device for sending a message according to an exemplary embodiment. The device for sending a message can include: a first determining module 301 configured to, when it is monitored that a triggering event with respect to a sending button in a message interface is generated, determine which condition the triggering event satisfies; a first sending module 302 configured to, if it is determined that the triggering event satisfies a condition for sending a common phrase, acquire a common phrase corresponding to the sending button and send the common phrase; wherein the common phrase was preset as corresponding to the sending button; and a second sending module 303 configured to, if it is determined that the triggering event satisfies a condition for sending an input message, acquire a content in a message input box and send the content.

Optionally, as shown in Fig. 3-2, the first determining module 301 includes: a first acquiring unit 3011 configured to, when it is monitored that a triggering event with respect to a sending button in a message interface is generated, acquire the trigger operation with respect to the sending button; a first determining unit 3012 configured to determine whether the trigger operation is a preset first operation and whether the sending button corresponds to a common phrase; and a first performing unit 3013 configured to, if it is determined that the trigger operation is a preset first operation and the sending button corresponds to a common phrase, determine that the triggering event satisfies a condition for sending a common phrase.

Optionally, as shown in Fig. 3-2, the first determining module 301 further includes: a second performing unit 3014 configured to, acquire a trigger operation with respect to the sending button, if it is determined that the trigger operation is a preset second operation, and the sending button corresponds to a common phrase, determine that the triggering event satisfies a condition for sending a common phrase; wherein the first sending module 302 is further configured to: acquire the common phrase corresponding to the sending button, and insert the common phrase corresponding to the sending button at a cursor position in a message input box of the message interface and send the whole content in the message input box.

As shown in Fig. 3-3, the device further includes: a first inserting module 304 configured to, if it is monitored that a trigger operation with respect to the sending button is generated and it is determined that the trigger operation is a preset third operation, acquire the common phrase corresponding to the sending button, and insert the common phrase corresponding to the sending button at a cursor position in a message input box of the message interface.

Optionally, as shown in Fig. 3-4, the device further includes: a setting module 305 configured to acquire a common phrase through a first acquiring operation on the message interface and set the common phrase as corresponding to the sending button.

Optionally, the setting module 305 includes: a second acquiring unit configured to, if it is monitored that a trigger operation with respect to a selected message in the message interface is generated, acquire the trigger operation; and a third acquiring unit configured to, if the trigger operation is a first acquiring operation, acquire the selected message as a common phrase; and a setting unit configured to set the common phrase as corresponding to the sending button.

Optionally, the setting unit is configured to, if the sending button corresponds to an existing common phrase, replace the existing common phrase corresponding to the sending button with the acquired common phrase; or if the sending button corresponds to an existing common phrase, set both of the acquired common phrase and the existing common phrase as corresponding to the sending button.

Optionally, if the sending button corresponds to a plurality of common phrases, as shown in Fig. 3-5, the device further includes: a matching module 306 configured to match each of the common phrases with a searching condition to obtain a matching degree between each of the common phrases and the searching condition; the searching condition including: intimacy between a user of the terminal and a message receiving party, a current time, and/or a friend group to which the message receiving party belongs; and a displaying module 307 configured to display a common phrase with the largest matching degree on the sending button.

Optionally, as shown Fig. 3-6, the device further includes: an acquiring module 308 configured to, if the triggering event is a preset fourth operation, display the plurality of common phrases corresponding to the sending button; a second determining module 309 configured to, when it is monitored that a trigger operation with respect to one of the common phrases is generated, determine which condition the trigger operation satisfies; a third sending module 310 configured to, if it is determined that the trigger operation is a preset first operation, send said one of the common phrases; if it is determined that the trigger operation is a preset second operation, insert said one of the common phrases at a cursor position in a message input box and send the whole content in the message input box; and a second inserting module 311 configured to, if it is determined that the trigger operation is a preset third operation, insert said one of the common phrases at a cursor position in the message input box.

Optionally, as shown in Fig. 3-2, the first determining module 301 includes: a second determining unit 3015 configured to determine whether a content has been input to the message input box of the message interface before it is monitored that the triggering event is generated and determine whether the sending button corresponds to a common phrase; if it is determined that a content has been input to the message input box before it is monitored that the triggering event is generated and the sending button does not correspond to any common phrase, determine that the triggering event satisfies a condition for sending an input message; or a third determining unit 3016 configured to acquire a trigger operation with respect to the sending button, determine whether the trigger operation is a preset fifth operation and determine whether a content has been input to the message input box; if it is determined that the trigger operation is a preset fifth operation and a content has been input to the message input box, determine that the triggering event satisfies a condition for sending an input message.

In the embodiment of the present disclosure, when it is monitored that a triggering event with respect to a sending button in a message interface is generated, it is determined which condition the triggering event satisfies; if it satisfies a condition for sending a common phrase, a common phrase corresponding to the sending button is directly acquired and sent. Thus, the user only needs to perform one operation to quickly send a message to the receiving party, and thereby it can improve message sending efficiency and meet the requirement of fast sending a message of the user.

With respect to the devices in the above embodiments, the specific manners for performing operations for individual modules therein have been described in detail in the embodiments regarding the related methods, which will not be elaborated herein.

An exemplary embodiment of the present disclosure provides a device for sending a message, including: a processor; and a memory for storing instructions executable by the processor; wherein the processor is configured to perform: when monitoring that a triggering event with respect to a sending button in a message interface is generated, determining which condition the triggering event satisfies; if determining that the triggering event satisfies a condition for sending a common phrase, acquiring a common phrase corresponding to the sending button and sending the common phrase; wherein the common phrase was preset as corresponding to the sending button; and if determining that the triggering event satisfies a condition for sending an input message, acquiring a content in a message input box and sending the content.

Fig. 4 is another block diagram illustrating a device 400 for sending a message according to an exemplary embodiment of the present disclosure. For example, the device 400 may be a mobile phone, a computer, a digital broadcast terminal, a messaging device, a gaming console, a tablet, a medical device, exercise equipment, a personal digital assistant, and the like.

Referring to Fig. 4, the device 400 may include one or more of the following components: a processing component 402, a memory 404, a power component 406, a multimedia component 408, an audio component 410, an input/output (I/O) interface 412, a sensor component 414, and a communication component 416.

The processing component 402 typically controls overall operations of the device 400, such as the operations associated with display, telephone calls, data communications, camera operations, and recording operations. The processing component 402 may include one or more processors 420 to execute instructions to perform all or part of the steps in the above described methods. Moreover, the processing component 402 may include one or more modules which facilitate the interaction between the processing component 402 and other components. For instance, the processing component 402 may include a multimedia module to facilitate the interaction between the multimedia component 408 and the processing component 402.

The memory 404 is configured to store various types of data to support the operation of the device 400. Examples of such data include instructions for any applications or methods operated on the device 400, contact data, phonebook data, messages, pictures, video, etc. The memory 404 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 406 provides power to various components of the device 400. The power component 406 may include a power management system, one or more power sources, and any other components associated with the generation, management, and distribution of power in the device 400.

The multimedia component 408 includes a screen providing an output interface between the device 400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 408 includes a front camera and/or a rear camera. The front camera and the rear camera may receive an external multimedia datum while the device 400 is in an operation mode, such as a photographing mode or a video mode. Each of the front camera and the rear camera may be a fixed optical lens system or have focus and optical zoom capability.

The audio component 410 is configured to output and/or input audio signals. For example, the audio component 410 includes a microphone ("MIC") configured to receive an external audio signal when the device 400 is in an operation mode, such as a call mode, a recording mode, and a voice recognition mode. The received audio signal may be further stored in the memory 404 or transmitted via the communication component 416. In some embodiments, the audio component 410 further includes a speaker to output audio signals.

The I/O interface 412 provides an interface between the processing component 402 and peripheral interface modules, such as a keyboard, a click wheel, buttons, and the like. The buttons may include, but are not limited to, a home button, a volume button, a starting button, and a locking button.

The sensor component 414 includes one or more sensors to provide status assessments of various aspects of the device 400. For instance, the sensor component 414 may detect an open/closed status of the device 400, relative positioning of components, e.g., the display and the keypad, of the device 400, a change in position of the device 400 or a component of the device 400, a presence or absence of user contact with the device 400, an orientation or an acceleration/deceleration of the device 400, and a change in temperature of the device 400. The sensor component 414 may include a proximity sensor configured to detect the presence of nearby objects without any physical contact. The sensor component 414 may also include a light sensor, such as a CMOS or CCD image sensor, for use in imaging applications. In some embodiments, the sensor component 414 may also include an accelerometer sensor, a gyroscope sensor, a magnetic sensor, a pressure sensor, or a temperature sensor.

The communication component 416 is configured to facilitate communication, wired or wirelessly, between the device 400 and other devices. The device 400 can access a wireless network based on a communication standard, such as WiFi, 2G, or 3G, or a combination thereof. In one exemplary embodiment, the communication component 416 receives a broadcast signal or broadcast associated information from an external broadcast management system via a broadcast channel. In one exemplary embodiment, the communication component 416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 404, executable by the processor 420 in the device 400, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium, when instructions in the storage medium are executed by the processor of the device 400, the device 400 is caused to perform the method for sending a message. The method includes: when monitoring that a triggering event with respect to a sending button in a message interface is generated, determining which condition the triggering event satisfies; if determining that the triggering event satisfies a condition for sending a common phrase, acquiring a common phrase corresponding to the sending button and sending the common phrase; wherein the common phrase was preset as corresponding to the sending button; and if determining that the triggering event satisfies a condition for sending an input message, acquiring a content in a message input box and sending the content.

Optionally, determining that the triggering event satisfies a condition for sending a common phrase includes: acquiring a trigger operation with respect to the sending button, if determining that the trigger operation is a preset first operation and the sending button corresponds to a common phrase, determining that the triggering event satisfies a condition for sending a common phrase.

Optionally, determining that the triggering event satisfies a condition for sending a common phrase further includes: acquiring a trigger operation with respect to the sending button, if determining that the trigger operation is a preset second operation, and the sending button corresponds to a common phrase, determining that the triggering event satisfies a condition for sending a common phrase; wherein acquiring a common phrase corresponding to the sending button and sending the common phrase comprises: acquiring the common phrase corresponding to the sending button, and inserting the common phrase corresponding to the sending button at a cursor position in a message input box of the message interface and sending the whole content in the message input box.

Optionally, the method further includes: if monitoring that a trigger operation with respect to the sending button is generated and determining the trigger operation is a preset third operation, acquiring the common phrase corresponding to the sending button, and inserting the common phrase corresponding to the sending button at a cursor position in a message input box of the message interface.

Optionally, the method further includes: acquiring a common phrase through a first acquiring operation on the message interface and setting the common phrase as corresponding to the sending button.

Optionally, acquiring a common phrase through a first acquiring operation on the message interface and setting the common phrase as corresponding to the sending button includes: if monitoring that a trigger operation with respect to a selected message in the message interface is generated, acquiring the trigger operation; and if the trigger operation is a first acquiring operation, acquiring the selected message as a common phrase and setting the common phrase as corresponding to the sending button.

Optionally, setting the common phrase as corresponding to the sending button includes: if the sending button corresponds to an existing common phrase, replacing the existing common phrase corresponding to the sending button with the acquired common phrase; or if the sending button corresponds to an existing common phrase, setting both of the acquired common phrase and the existing common phrase as corresponding to the sending button.

Optionally, if the sending button corresponds to a plurality of common phrases, the method further includes: matching each of the common phrases with a searching condition to obtain a matching degree between each of the common phrases and the searching condition; the searching condition including: intimacy between a user of the terminal and a message receiving party, a current time, and/or a friend group to which the message receiving party belongs; and displaying a common phrase with the largest matching degree on the sending button.

Optionally, the method further includes: if the triggering event is a preset fourth operation, displaying the plurality of common phrases corresponding to the sending button; when monitoring that a trigger operation with respect to one of the common phrases is generated, determining which condition the trigger operation satisfies; if determining that the trigger operation is a preset first operation, sending said one of the common phrases; if determining that the trigger operation is a preset second operation, inserting said one of the common phrases at a cursor position in a message input box and sending the whole content in the message input box; and if determining that the trigger operation is a preset third operation, inserting said one of the common phrases at a cursor position in the message input box.

Optionally, determining that the triggering event satisfies a condition for sending an input message includes: determining whether a content has been input to the message input box of the message interface before monitoring that the triggering event is generated and determining whether the sending button corresponds to a common phrase; if determining that a content has been input to the message input box before monitoring that the triggering event is generated and the sending button does not correspond to any common phrase, determining that the triggering event satisfies a condition for sending an input message; or acquiring a trigger operation with respect to the sending button, determining whether the trigger operation is a preset fifth operation and determining whether a content has been input to the message input box; if determining that the trigger operation is a preset fifth operation and a content has been input to the message input box, determining that the triggering event satisfies a condition for sending an input message.

In the embodiment of the present disclosure, when it is monitored that a triggering event with respect to a sending button in a message interface is generated, it is determined which condition the triggering event satisfies; if it satisfies a condition for sending a common phrase, a common phrase corresponding to the sending button is directly acquired and sent. Thus, the user only needs to perform one operation to quickly send a message to the receiving party, and thereby it can improve message sending efficiency and meet the requirement of fast sending a message of the user.

## Claims

1. A method for sending a message, which is applied in a terminal, **characterized in that** the method comprises:
when detecting that a triggering event with respect to a sending button in a message interface is generated, determining (101, 202) which condition the triggering event satisfies;
if determining that the triggering event satisfies a condition for sending a common phrase, acquiring (102, 203) a common phrase corresponding to the sending button and sending the common phrase; wherein the common phrase was preset as corresponding to the sending button; and
if determining that the triggering event satisfies a condition for sending an input message, acquiring (103, 204) a content in a message input box and sending the content.

2. The method of claim 1, wherein determining that the triggering event satisfies a condition for sending a common phrase comprises:
acquiring a trigger operation with respect to the sending button, if determining that the trigger operation is a preset first operation and the sending button corresponds to a common phrase, determining that the triggering event satisfies a condition for sending a common phrase.

3. The method of claim 1 or 2, wherein determining that the triggering event satisfies a condition for sending a common phrase comprises:
acquiring a trigger operation with respect to the sending button, if determining that the trigger operation is a preset second operation, and the sending button corresponds to a common phrase, determining that the triggering event satisfies a condition for sending a common phrase;
wherein acquiring a common phrase corresponding to the sending button and sending the common phrase comprises:
acquiring the common phrase corresponding to the sending button, and inserting the common phrase corresponding to the sending button at a cursor position in a message input box of the message interface and sending the whole content in the message input box.

4. The method of claim 1, 2 or 3, wherein the method further comprises: if monitoring that a trigger operation with respect to the sending button is generated and determining that the trigger operation is a preset third operation, acquiring the common phrase corresponding to the sending button, and inserting the common phrase corresponding to the sending button at a cursor position in a message input box of the message interface.

5. The method of any preceding claim, wherein the method further comprises: acquiring a common phrase through a first acquiring operation on the message interface and setting the common phrase as corresponding to the sending button.

6. The method of claim 5, wherein acquiring a common phrase through a first acquiring operation on the message interface and setting the common phrase as corresponding to the sending button comprises:
if monitoring that a trigger operation with respect to a selected message in the message interface is generated, acquiring the trigger operation; and
if the trigger operation is a first acquiring operation, acquiring the selected message as a common phrase and setting the common phrase as corresponding to the sending button.

7. The method of claim 6, wherein setting the common phrase as corresponding to the sending button comprises:
if the sending button corresponds to an existing common phrase, replacing the existing common phrase corresponding to the sending button with the acquired common phrase; or
if the sending button corresponds to an existing common phrase, setting both of the acquired common phrase and the existing common phrase as corresponding to the sending button.

8. The method of claim 7, wherein if the sending button corresponds to a plurality of common phrases, the method further comprises:
matching each of the common phrases with a searching condition to obtain a matching degree between each of the common phrases and the searching condition; the searching condition comprising: intimacy between a user of the terminal and a message receiving party, a current time, and/or a friend group to which the message receiving party belongs; and
displaying a common phrase with the largest matching degree on the sending button.

9. The method of claim 7, wherein the method further comprises:
if the triggering event is a preset fourth operation, displaying the plurality of common phrases corresponding to the sending button;
when monitoring that a trigger operation with respect to one of the common phrases is generated, determining which condition the trigger operation satisfies;
if determining that the trigger operation is a preset first operation, sending said one of the common phrases;
if determining that the trigger operation is a preset second operation, inserting said one of the common phrases at a cursor position in a message input box and sending the whole content in the message input box; and
if determining that the trigger operation is a preset third operation, inserting said one of the common phrases at a cursor position in the message input box.

10. The method of claim 1, wherein determining that the triggering event satisfies a condition for sending an input message comprises:
determining whether a content has been input to the message input box of the message interface before monitoring that the triggering event is generated and determining whether the sending button corresponds to a common phrase; if determining that a content has been input to the message input box before monitoring that the triggering event is generated and the sending button does not correspond to any common phrase, determining that the triggering event satisfies a condition for sending an input message; or
acquiring a trigger operation with respect to the sending button, determining whether the trigger operation is a preset fifth operation and determining whether a content has been input to the message input box; if determining that the trigger operation is a preset fifth operation and a content has been input to the message input box, determining that the triggering event satisfies a condition for sending an input message.

11. A device for sending a message, which is applied in a terminal, **characterized in that** the device comprises:
a first determining module (301) configured to, when it is monitored that a triggering event with respect to a sending button in a message interface is generated, determine which condition the triggering event satisfies;
a first sending module (302) configured to, if it is determined that the triggering event satisfies a condition for sending a common phrase, acquire a common phrase corresponding to the sending button and send the common phrase; wherein the common phrase was preset as corresponding to the sending button; and
a second sending module (303) configured to, if it is determined that the triggering event satisfies a condition for sending an input message, acquire a content in a message input box and send the content.

12. The device of claim 11, wherein the first determining module (301) comprises:
a first acquiring unit (3011) configured to, when it is monitored that a triggering event with respect to a sending button in a message interface is generated, acquire the trigger operation with respect to the sending button;
a first determining unit (3012) configured to determine whether the trigger operation is a preset first operation and whether the sending button corresponds to a common phrase; and
a first performing unit (3013) configured to, if it is determined that the trigger operation is a preset first operation and the sending button corresponds to a common phrase, determine that the triggering event satisfies a condition for sending a common phrase.

13. The device of claim 11 or 12, wherein the first determining module (301) comprises:
a second performing unit (3014) configured to, acquire a trigger operation with respect to the sending button, if it is determined that the trigger operation is a preset second operation, and the sending button corresponds to a common phrase, determine that the triggering event satisfies a condition for sending a common phrase;
wherein the first sending module (302) is further configured to:
acquire the common phrase corresponding to the sending button, and insert the common phrase corresponding to the sending button at a cursor position in a message input box of the message interface and send the whole content in the message input box.

14. The device of any of claim 12, 13 or 14, wherein the device further comprises:
a first inserting module (304) configured to, if it is monitored that a trigger operation with respect to the sending button is generated and it is determined that the trigger operation is a preset third operation, acquire the common phrase corresponding to the sending button, and insert the common phrase corresponding to the sending button at a cursor position in a message input box of the message interface.

15. The device of any of claims 11 to 14, wherein the device further comprises:
an acquiring module (308) configured to, if the triggering event is a preset fourth operation, display the plurality of common phrases corresponding to the sending button;
a second determining module (309) configured to, when it is monitored that a trigger operation with respect to one of the common phrases is generated, determine which condition the trigger operation satisfies;
a third sending module (310) configured to, if it is determined that the trigger operation is a preset first operation, send said one of the common phrases; if it is determined that the trigger operation is a preset second operation, insert said one of the common phrases at a cursor position in a message input box and send the whole content in the message input box; and
a second inserting module (311) configured to, if it is determined that the trigger operation is a preset third operation, insert said one of the common phrases at a cursor position in the message input box.
